Europäisches Patentamt

European Patent Office

Office européen des brevets

(19)

(11) Veröffentlichungsnummer: **0 229 286**
**B1**

(12) **EUROPÄISCHE PATENTSCHRIFT**

(45) Veröffentlichungstag der Patentschrift:
28.03.90

(21) Anmeldenummer: 86116680.9

(22) Anmeldetag: 01.12.86

(51) Int. Cl.⁴: **H01G 1/035,** H01G 1/14,
H01C 13/02

(54) Elektrisches Bauelement in Chip-Bauweise.

(30) Priorität: 17.12.85 DE 3544592

(43) Veröffentlichungstag der Anmeldung:
22.07.87 Patentblatt 87/30

(45) Bekanntmachung des Hinweises auf die Patenterteilung:
28.03.90 Patentblatt 90/13

(84) Benannte Vertragsstaaten:
AT DE FR GB

(56) Entgegenhaltungen:
EP-A- 0 200 670
DE-A- 3 412 492
FR-A- 2 555 356
GB-A- 1 064 368

(73) Patentinhaber: Siemens Aktiengesellschaft,
Wittelsbacherplatz 2, D-8000 München 2(DE)
(84) Benannte Vertragsstaaten: DE FR GB

(73) Patentinhaber: Siemens Bauelemente OHG,
Siemensstrasse 43, A-8530 Deutschlandsberg(AT)
(84) Benannte Vertragsstaaten: AT

(72) Erfinder: Ott, Günter, Dipl.-Ing., Grabenstrasse 14,
A-8541 Schwanberg(AT)

## Beschreibung

Die Erfindung betrifft ein elektrisches Bauelement in Chip-Bauweise, das aus einem plättchenförmigen Körper aus elektrisch wirksamem Material besteht, der auf seinen gegenüberliegenden Stirnflächen mit Belegungen versehen ist, das Anschlußelemente zum Verbinden der Belegungen entgegengesetzter Polarität mit Kontaktstellen einer gedruckten Schaltung aufweist und das mit einem Isolierüberzug versehen ist.

Ein elektrisches Bauelement in Chip-Bauweise, das diese Merkmale aufweist, ist beispielsweise in den deutschen Auslegeschriften 1 064 127 und 1 064 574 beschrieben. Dort ist auch die Problematik erläutert, die auftritt, wenn elektrische Bauelemente, die keine separaten und vom Bauelement abstehenden Stromzuführungselemente aufweisen, mit den Kontaktstellen gedruckter Schaltungen verbunden werden sollen. Diese Probleme bestehen unter anderem darin, daß bei dem für diese Zwecke notwendigen Tauchlötvorgang die elektrischen Bauelemente mit dem flüssigen, über seine Schmelztemperatur erhitzten Lot zwangsläufig in Berührung kommen. Es ist deshalb erforderlich, sowohl die Bauelemente als auch die Anschlußelemente derselben so auzugestalten, daß sie diese Temperaturen, meist über 250°C, aushalten, ohne Veränderungen der elektrischen und/dielektrischen Eigenschaften zu erleiden.

Elektrische Bauelemente im Sinne der vorliegenden Erfindung sind insbesondere elektrische Widerstände mit einem von der anliegenden Spannung abhängigen Widerstandswert (Varistoren), ferner Widerstände mit von der Temperatur abhängigen Widerstandswert (Kaltleiter = PTC-Widerstand oder Heißleiter = NTC-Widerstand), elektrische Kondensatoren mit keramischem Dielektrikum oder einem Dielektrikum aus Kunststoff, wobei alle diese Bauelemente entweder aus einem homogenen Körper oder einem aus Schichten mit dazwischen gefügten Belegungen bestehenden Körper ausgeführt sein können.

Alle diese elektrischen Bauelemente sind in zahlreichen Veröffentlichungen hinreichend beschrieben, wofür beispielsweise auf die bereits erwähnten beiden deutschen Auslegeschriften 1 064 127 und 1 064 574, sowie auf die DE-PS 31 20 298 und die DE-OS 34 12 492 hingewiesen wird. Varistoren und elektrische Kondensatoren, jeweils aus Keramikmaterial und in Schichtbauweise sind beispielsweise in der nicht vorveröffentlichten DE-OS 35 01 419 (VPA 85 P 7001) mit vielen vorveröffentlichten Literaturhinweisen beschrieben. Elektrische Schichtkondensatoren mit Kunststoffdielektrikum sind beispielsweise in der DE-PS 1 764 541 (= US-PS 3 670 378) beschrieben. Keramische Kaltleiter in Schichtbauweise sind in der GB-PS 932 558 beschrieben.

Um diese elektrischen Bauelemente für die Chip-Bauweise geeignet zu machen, hat man bisher verschiedene Wege beschritten. So wird in den DE-ASen 1 064 127 und 1 064 574 für ein plättchenförmiges Bauelement die Lösung vorgeschlagen, die Belegungen der beiden Stirnflächen jeweils über die Seitenflächen bis auf die gegenüberliegende Stirnfläche aufzutragen, wobei auf den Stirnflächen zwischen den Belegungen entgegengesetzter Polarität ein Isolationsabstand bestehen bleiben muß. In dieser Weise kann das Bauelement auf die Kontaktstellen der gedruckten Schaltung aufgelegt und mit ihnen durch Tauchlötung verbunden werden. Diese Lösung bewirkt, daß der aktiv ausgenutzte Teil des Körpers wesentlich kürzer ist als die Länge desselben.

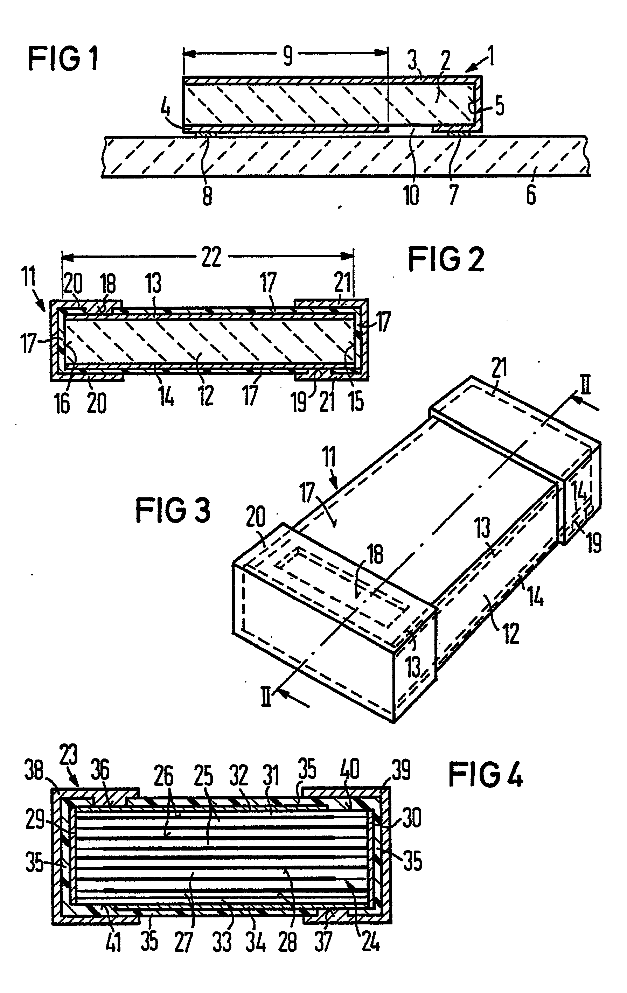

Diese Verhältnisse sind in Fig. 1 näher erläutert, wobei jedoch schon eine Weiterentwicklung dahingehend gegeben ist, daß nur eine der Belegungen über die Seitenfläche hinweg auf die gegenüberliegende Stirnfläche gezogen ist. Fig. 1 wird bei der Erläuterung der Figuren noch näher erklärt.

Eine weitere Möglichkeit, um ein elektrisches Bauelement für die Chip-Bauweise geeignet zu machen, ist in der bereits erwähnten DE-PS 31 20 298 beschrieben und besteht darin, über die Enden des elektrischen Bauelementes Kappen überzustülpen und diese mit den jeweiligen Belegungen in entsprechender Weise elektrisch zu verbinden. Hierbei müssen besondere Maßnahmen ergriffen werden, um sowohl eine mechanisch einwandfreie als auch elektrisch ausreichende Verbindung zu erzeugen. Auch diese Lösung hat in die Praxis keinen oder nur einen unerheblichen Eingang gefunden, zumal es schwierig ist, einen Isolierüberzug anzubringen.

Wiederum eine andere Möglichkeit, um elektrische Bauelemente für die Chip-Bauweise geeignet zu machen, ist in der bereits erwähnten DE-OS 34 12 492 beschrieben. Diese Lösung, die auch bei anderen Bauelementen schon in nicht unerheblichem Maße in der Praxis eingang gefunden hat, sieht vor, daß an Kontaktstellen des elektrischen Bauelementes zunächst Bänder aus biegsamem Metall befestigt werden, wonach dann das so vorbereitete Bauelement derart mit zur Isolierung dienendem Kunststoff umpreßt wird, daß diese Bänder aus der Kunststoffumhüllung herausragen und dann längs der Oberfläche zur Bildung von Lötflächen entlanggeführt werden. Diese Möglichkeit gewährleistet, daß ein nach außen hin rundherum isoliertes elektrisches Bauelement resultiert, bei dem nur die Anschlußelemente frei sind und entsprechend verlötet werden können.

Bei den anderen, oben beschriebenen Möglichkeiten muß für die Umhüllung des elektrischen Bauelementes ein zusätzlicher Aufwand in Kauf genommen werden, wobei hinzu kommt, daß die im Preßverfahren hergestellte Kunststoffumhüllung die Abmessungen des Bauelementes nicht unerheblich zunehmen.

Der vorliegenden Erfindung liegt die Aufgabe zugrunde, ein elektrisches Bauelement in Chip-Bauweise anzugeben, bei dem das aktiv ausgenutzte Volumen des elektrisch wirsamen Körpers praktisch dem Gesamtvolumen desselben entspricht und dabei die äußeren Abmessungen des elektrischen Bauelementes nur geringfügig und nicht ins Gewicht fallend vergrößert werden.

Zur Lösung dieser Aufgabe ist das elektrische Bauelement der eingangs angegebenen Art erfindungsgemäß gekennzeichnet durch die Merkmale:

a) jede Belegung gleicher Polarität befindet sich nur auf einer Stirnfläche des Körpers und bedeckt diese vollständig bis an die Seitenflächen oder läßt einen Isolierrand frei,

b) der mit den Belegungen versehene Körper ist von einem Isolierüberzug umgeben, der auf den Belegungen in der Nähe beider Seitenflächen des Körpers je eine Freifläche enthält, die gegeneinander drehspiegelbildlich versetzt sind,

c) die Anschlußelemente sind kappenförmig, bestehen aus leit- und lötfähigem Material und stehen jeweils mit einer Belegung im Bereich der Freiflächen des Isolierüberzuges in elektrischem Kontakt.

Eine Ausführungsform des elektrischen Bauelementes mit einem Körper, der aus Schichten aus elektrisch wirksamem Material besteht, zwischen denen Belegungen angeordnet sind, die alternierend von Schicht zu Schicht zu gegenüberliegenden Seitenflächen geführt und dort mit Metallbelägen elektrisch leitend miteinander verbunden sind, ist erfindungsgemäß dadurch gekennzeichnet, daß der aus den Schichten bestehende Körper auf seinen beiden Stirnflächen mit Decklagen versehen ist, auf denen zur Außenseite hin die Belegungen aufgetragen sind, die an einer Seite je einen Isolierrand freilassen und an der gegenüberliegenden Seite jeweils mit den dortigen Metallbelägen elektrisch verbunden sind.

Als Material für den Isolierüberzug kommt Glas oder Kunststoff in Frage, sofern dieser gegenüber den Temperaturen des Lotes bei der Tauchlötung widerstandfähig ist.

Als Material für die Anschlußelemente kommt Einbrennsilber, das ist eine Paste hauptsächlich aus Silber, die ferner Glasflußmittel und Haftoxide enthält und zum Auftragen auf die entsprechenden Stellen des Körpers und Einbrennen bei Temperaturen von etwa 700°C dient. Ferner kommt Leitsilber infrage, das ist ein hauptsächlich aus Silberpartikeln bestehender Werkstoff mit einem Anteil eines organischen Klebemittels.

Bei einem Körper aus Keramik als elektrisch wirksames Material bestehen vorzugsweise der Isolierüberzug aus Glas und die Anschlußelemente aus Einbrennsilber.

Bei einem Körper aus Kunststoffschichten als elektrisch wirksames Material bestehen vorzugsweise der Isolierüberzug aus Polyimidlack und die Anschlußelemente aus Leitsilber.

Durch die Erfindung werden die Vorteile erzielt, daß der Körper des elektrischen Bauelementes vollständig oder nahezu vollständig elektrisch aktiv ausgenutzt wird, daß die Abmessungen des Körpers des elektrischen Bauelementes durch die einzelnen Überzüge und Aufträge nur unwesentlich vergrößert werden, daß zusätzliche Maßnahmen für die elektrische Verbindung zwischen den Belegungen und den kappenförmigen Anschlußelementen entfallen, daß ein allseitig umhülltes elektrisches Bauelement resultiert und daß es bei diesem elektrischen Bauelement gleichgültig ist, wie es mit den Kontaktstellen der gedruckten Schaltung verbunden wird, denn auf jeder Stirnfläche liegen Anschlußelemente entgegengesetzter Polarität vor.

Die Erfindung wird nachfolgend anhand der beigefügten Figuren näher erläutert.
Es zeigen:

Fig. 1 ein zum Stand der Technik gehörendes elektrisches Bauelement in Chip-Bauweise,

Fig. 2 ein elektrisches Bauelement gemäß der vorliegenden Erfindung im Schnitt längs der Linie II-II in Fig. 3,

Fig. 3 ein elektrisches Bauelement gemäß der Erfindung in perspektivischer Ansicht und

Fig. 4 eine andere Ausführungsform eines elektrischen Bauelementes gemäß der Erfindung.

Das in Fig. 1 gezeigte elektrische Bauelement gehört zum Stand der Technik und ist etwa aus den deutschen Auslegeschriften 1 064 127 und 1 064 574 ableitbar. Das elektrische Bauelement 1 besteht aus einem Körper 2, der auf seiner oberen Stirnfläche mit einer Belegung 3 versehen ist, die über die Seitenfläche 5 reichend bis auf die gegenüberliegende Stirnfläche verlängert ist. Auf dieser Stirnfläche befindet sich die Belegung 4 entgegengesetzter Polarität. Zwischen den Belegungen 3 und 4 befindet sich eine Isolierfläche 10. Das elektrische Bauelement 1 ist auf der Platte 6 einer gedruckten Schaltung, und zwar auf den Kontaktstellen 7 und 8 aufgelegt, wobei die Belegung 3 mit der Kontaktstelle 7 und die Belegung 4 mit der Kontaktstelle 8 verbunden ist, beispielsweise durch Tauchlötung.

In den genannten beiden deutschen Auslegeschriften ist für diese Ausführungsform ein Isolierüberzug nicht vorgesehen. Selbst wenn man ihn aufbringen würde, so muß darauf geachtet werden, daß eine Verbindung mit den Kontaktstellen 7 und 8 möglich bleibt.

Der aktiv ausgenutzte Teil 9 des Körpers 1 ist erheblich geringer als die Länge dieses Körpers. Dieser aktiv ausgenutzte Teil 9 würde auch nicht größer werden, wenn man - wie in den beiden deutschen Auslegeschriften gezeigt - den Körper 2 länger machen und die Belegung 4 über die der Seitenfläche 5 gegenüberliegende Seitenfläche reichen auf die obere Stirnfläche hinüberziehen würde.

Anhand der Fig. 2 werden die Vorteile der vorliegenden Erfindung deutlich.

Das elektrische Bauelement 11 besteht aus dem Körper 12 aus elektrisch wirksamem Material, der an seinen beiden gegenüberliegenden Stirnflächen mit Belegungen 13 und 14 versehen ist, die - wie auch beim Stand der Technik - in aller Regel aus Metall, beispielsweise aus Einbrennsilber oder aus aufgedampftem oder durch Metallspritzen (Schoop-Verfahren) hergestelltem Aluminium, bestehen. Die Seitenflächen 15 und 16 des Körpers 12 sind frei von Metallbelegungen, ihre Höhe bestimmt den Isolationsabstand zwischen den Belegungen 13 und 14.

Die Belegungen 13 und 14 gleicher Polarität befinden sich somit nur jeweils auf einer Stirnseite des Körpers 12 und bedecken diese vollständig bis an die Seitenflächen 15 und 16. Der aktiv ausgenutzte Teil 22 des Körpers 12 entspricht somit seiner vollen Länge.

Der mit den Belegungen 13 und 14 versehene Körper 12 ist vorzugsweise rundherum von einem Isolierüberzug 17 umgeben, und zwar, wie auch aus Fig. 3 hervorgeht, sowohl oberhalb der Belegungen 13 und 14, als auch an den Seitenflächen 15 und 16 zwischen diesen Belegungen. Der Isolierüberzug 17 enthält auf den Belegungen 13 und 14 in der Nähe beider Seitenflächen 15 und 16 des Körpers 12 je eine Freifläche 18 bzw. 19. Die Freiflächen 18 und 19 sind gegeneinander drehspiegelbildlich versetzt, d.h. daß sich die Freifläche 18 auf der oberen Belegung 13 links und die Freifläche 19 auf der unteren Belegung 14 rechts in Fig. 2 befindet. Die beiden Freiflächen 18 und 19 können sich entweder durchgehend über die gesamte Breite des Körpers 12 erstrecken, wie dies für die Freifläche 19 in Fig. 3 angedeutet ist, oder diese beiden Freiflächen sind nur als Fenster ausgebildet, wie es für die Freifläche 18 in Fig. 3 gezeigt ist. Auch die gleichzeitige Anwendung sowohl eines Fensters, als auch einer durchgehenden Freifläche ist möglich.

Die Herstellung der Freiflächen 18 und 19 bereitet im Prinzip keine Schwierigkeiten, denn es kann hier die von der Herstellung gedruckter Schaltungen an sich bekannte Abdecktechnik eingesetzt werden. Bei dieser Technik wird der Bereich eines Körpers, der frei von einer später aufzubringenden Auflage bleiben soll, mit einer Abdeckung versehen, die entweder durch unterschiedliche Löslichkeit oder durch späteres Abziehen nach dem Herstellen des Überzuges wieder entfernt werden kann. Die Verwendung einer Abdeckung aus einem Kunststoff, der sich in einem Lösungsmittel löst, in welchem sich der Isolierüberzug nicht löst, ist vorteilhaft, weil dieser Verfahrensschritt dann nach der Schüttgutmethode durchgeführt werden kann.

Soll der Isolierüberzug 17 aus Glas bestehen, so kann dieses in Form eines Pulvers aufgetragen werden, wobei der Bereich der späteren Freiflächen so vorbehandelt wird, daß dort kein Glaspulver haften bleibt. Solches Glaspulver, auch Glasfritte genannt, kann beispielsweise bei 700°C eingebrannt werden, wenn die Belegungen 13 und 14 aus Einbrennsilber mit einer Einbrenntemperatur von 750 bis 800° bestehen. Die dann aufzutragenden kappenförmigen Anschlußelemente würden in diesem Fall zweckmäßigerweise aus einem Einbrennsilber hergestellt, dessen Einbrenntemperatur unterhalb von 700°C, beispielsweise bei 600 bis 650°C, liegt.

Die kappenförmigen Anschlußelemente 20 und 21 sind an den gegenüberliegenden Enden des plättchenförmigen Körpers 12 aufgetragen, und zwar derart, daß das Anschlußelement 20 im Bereich der Freifläche 18 des Isolierüberzuges 17 mit der Belegung 13 in elektrischem Kontakt steht, geringfügig auf dieser Stirnfläche über den Isolierüberzug 17 hinüberragt und sich über die Seitenfläche 16 bis auf die gegenüberliegende Stirnfläche etwa in der gleichen Länge wie auf der gegenüberliegenden Stirnfläche erstreckt.

Gleiches gilt für das Anschlußelement 21, das im Bereich der Freifläche 19 des Isolierüberzuges 17 mit der Belegung 14 in Verbindung steht und bis auf die gegenüberliegende Stirnfläche reicht.

Da die Dicken des Isolierüberzuges 17, unter Berücksichtigung der notwendigen Isolation, und der kappenförmigen Anschlußelemente 20 und 21 nur sehr gering sind, werden auch die Abmessungen des Bauelementes dadurch nur unwesentlich vergrößert, so daß der Abstand zwischen den Kontaktstellen 7 und 8 einer gedruckten Schaltung voll ausgenutzt werden kann, wobei hinzukommt, daß die Kontaktstellen 7 und 8 in aller Regel in einem bestimmten Rastermaßabstand (Vielfaches von 2,5 mm) stehen und damit das elektrische Bauelement auch noch bis über die Flächen außerhalb der Kontaktstellen reichen kann.

In Fig. 3 sind gleiche Teile mit gleichen Bezugsziffern versehen. Man erkennt, daß ein besonders kompaktes Bauelement resultiert.

In Fig. 4 ist ein elektrisches Bauelement 23 gemäß der Erfindung gezeigt, das aus einem Körper 24 besteht, der aus einer Vielzahl übereinandergeordneter Schichten 25 und 27 zusammengesetzt ist. Dazwischen befinden sich alternierend von Schicht 25 zu Schicht 27 Belegungen 26 und 28, die zu gegenüberliegenden Seitenflächen geführt und dort durch Metallbeläge 29 und 30 elektrisch leitend miteinander verbunden sind. Die Schichten 25 und 27 können aus keramischem Material oder aus Kunststoff bestehen, und es kann sich dabei um einen keramischen Vielschichtkondensator, um einen Stapel- oder Schichtkondensator mit Kunststoffdielektrikum oder um einen elektrischen Widerstand aus keramischem Material mit entsprechenden elektrischen Eigenschaften (Varistor, Kaltleiter, Heißleiter) handeln.

Der Körper 24 enthält oben eine Decklage 31 aus Isoliermaterial, auf der eine Metallbelegung 32 zur Außenseite des Körpers 24 gerichtet aufgetragen ist. Die Metallbelegung 32 läßt einen Isolierstreifen 40 zum Metallbelag 30 frei und ist an der gegenüberliegenden Seitenfläche mit dem Metallbelag 29 elektrisch leitend verbunden. Somit stellt die Belegung 32 über den Metallbelag 29 eine nach außen geführte Verbindung sämtlicher Belegungen 26 auf den Schichten 25 dar.

Der Körper 24 weist ferner im unteren Teil ebenfalls eine aus Isoliermaterial bestehende Decklage 33 auf, auf der, ebenfalls nach außen gerichtet, eine Belegung 34 aufgetragen ist, die einen Isolierstreifen 41 zum Metallbelag 29 bildet und auf der gegenüberliegenden Seitenfläche mit dem Metallbelag 30 leitend verbunden ist. Auf diese Weise stellt die Belegung 34 über den Metallbelag 30 eine nach außen geführte elektrische Verbindung der Belegungen 28 auf den Schichten 27 dar.

Der in der angegebenen Weise mit Belegungen versehene Körper 24 ist von einem Isolierüberzug 35 allseitig umgeben, der auf der Belegung 32 eine Freifläche 36 und auf der Belegung 34 eine Freifläche 37 enthält. Diese Freiflächen sind entsprechend den Freiflächen 18 und 19 in den Figuren 2 und 3 ausgebildet.

In gleicher Weise, wie bei Fig. 2 beschrieben, sind die beiden Enden des Körpers 24 mit kappenförmigen Anschlußelementen 38 und 39 versehen.

Die kappenförmigen Anschlußelemente können durch entsprechend tiefes Eintauchen der Seitenteile der mit den Isolierüberzügen 17 bzw. 35 versehenen Körper 12 bzw. 24 in eine Metallsuspension, durch Bestreichen der entsprechenden Teile mit einer solchen Suspension oder auch in anderer Weise, zum Beispiel durch Bedampfen, mit dem Metall der Anschlußelemente, hergestellt werden.

Bezugszeichenliste

1 elektrisches Bauelement (Stand der Technik)
2 Körper des elektrischen Bauelementes 1
3 Belegung auf einer Stirnfläche des Körpers 1
4 Belegung auf der anderen Stirnfläche des Körpers 1
5 Seitenfläche des Körpers 1
6 Platte einer gedruckten Schaltung
7 Kontaktstelle
8 Kontaktstelle
9 aktiv ausgenutzter Teil des Körpers 1
10 Isolationsfläche
11 elektrisches Bauelement gemäß der Erfindung
12 Körper des elektrischen Bauelements 11
13 Belegung auf einer Stirnfläche des Körpers 12
14 Belegung auf der anderen Stirnfläche des Körpers 12
15 Seitenfläche des Körpers 12
16 Seitenfläche des Körpers 12
17 Isolationsüberzug
18 Freifläche des Isolationsüberzuges auf der Belegung 13
19 Freifläche des Isolationsüberzuges auf der Belegung 14
20 kappenförmiges, leit- und lötfähiges Anschlußelement
21 kappenförmiges, leit- und lötfähiges Anschlußelement
22 aktiv ausgenutzter Teil des Körpers 12
23 elektrisches Bauelement gemäß der Erfindung
24 Körper des elektrischen Bauelementes 23
25 Schichten im Körper 24
26 Belegungen auf den Schichten 25
27 Schichten im Körper 24
28 Belegungen auf den Schichten 27
29 Metallbelag zur Kontaktierung der Belegungen 26
30 Metallbelag zur Kontaktierung der Belegungen 28
31 obere Decklage
32 Belegung auf der oberen Decklage 31
33 untere Decklage
34 Belegung auf der unteren Decklage 33
35 Isolierüberzug
36 Freifläche des Isolierüberzuges auf der Belegung 32
37 Freifläche des Isolierüberzuges auf der Belegung 34
38 kappenförmiges, leit- und lötfähiges Anschlußelement
39 kappenförmiges, leit- und lötfähiges Anschlußelement
40 Isolierstreifen zwischen der Belegung 32 und dem Metallbelag 30
41 Isolierstreifen zwischen der Belegung 34 und dem Metallbelag 29

Patentansprüche

1. Elektrisches Bauelement (11, 23) in Chip-Bauweise, das aus einem plättchenförmigen Körper (12, 24) aus elektrisch wirksamem Material besteht, der auf seinen gegenüberliegenden Stirnflächen mit Belegungen (13, 14, 32, 34) versehen ist, das Anschlußelemente (20, 21, 38, 39) zum Verbinden der Belegungen entgegengesetzter Polarität mit Kontaktstellen (7, 8) einer gedruckten Schaltung aufweist und das mit einem Isolierüberzug versehen ist, **gekennzeichnet** durch die Merkmale:

a) jede Belegung (13, 14, 32, 34) gleicher Polarität befindet sich nur auf einer Stirnfläche des Körpers (12, 24) und bedeckt diese vollständig bis an die Seitenflächen (15, 16) oder läßt einen Isolierstreifen (40, 41) zur Seitenfläche (15, 16) frei,

b) der mit den Belegungen (13, 14, 32, 34) versehene Körper (12, 24) ist von einem Isolierüberzug (17, 35) umgeben, der auf den Belegungen (13, 14, 32, 34) in der Nähe beider Seitenflächen (15, 16) des Körpers (12,24) je eine Freifläche (18, 19, 36, 37) enthält, die gegeneinander drehspiegelbildlich versetzt sind,

c) die Anschlußelemente (20, 21, 38, 39) sind kappenförmig, bestehen aus leit- und lötfähigem Material und stehen jeweils mit einer Belegung (13 bzw. 14, 32 bzw. 34) im Bereich der Freiflächen (18, 19, 36, 37) des Isolierüberzuges (17, 35) in elektrischem Kontakt.

2. Elektrisches Bauelement nach Anspruch 1, mit einem Körper (24), der aus Schichten (25, 27) aus elektrisch wirksamem Material besteht, zwischen denen Belegungen (26, 28) angeordnet sind, die alternierend von Schicht (25) zu Schicht (27) zu gegenüberliegenden Seitenflächen geführt und dort mit Metallbelägen (29, 30) elektrisch leitend miteinander verbunden sind, **dadurch gekennzeichnet,** daß der aus den Schichten (25, 27) bestehende Körper (24) auf seinen beiden Stirnflächen mit Decklagen (31, 33) versehen ist, auf denen zur Außenseite hin die Belegungen (32, 34) aufgetragen sind, die an einer Seite je einen Isolierstreifen (40, 41) freilassen und an der gegenüberliegenden Seite jeweils mit den dortigen Metallbelägen (29, 30) elektrisch verbunden sind.

3. Elektrisches Bauelement nach Anspruch 1 oder 2, **dadurch gekennzeichnet,** daß bei einem Körper (12, 24) aus Keramik als elektrisch wirksames Material der Isolierüberzug (17, 35) aus Glas und die Anschlußelemente (20, 21, 38, 39) aus Einbrennsilber bestehen.

4. Elektrisches Bauelement nach Anspruch 1 oder 2, **dadurch gekennzeichnet,** daß bei einem Körper (24) aus Kunststoffschichten (25, 27) als elektrisch wirksames Material der Isolierüberzug (35) aus Polyimidlack und die Anschlußelemente (38, 39) aus Leitsilber bestehen.

**Claims**

1. Electrical component (11, 23) in the form of a chip which consists of a wafer-shaped body (12, 24) of electrically effective material which is provided on its opposing end faces with coverings (13, 14, 32, 34), which has connector elements (20, 21, 38, 39) for connecting the coverings of opposite polarity to contact points (7, 8) of a printed circuit, and which is provided with an insulating coating, characterized by the features:

a) each covering (13, 14, 32, 34) of the same polarity is located on only one end face of the body (12, 24) and covers the latter completely up to the side faces (15, 16) or leaves free an insulating strip (40, 41) to the side face (15, 16),

b) the body (12, 24) provided with the coverings (13, 14, 32, 34) is surrounded by an insulating coating (17, 35) which, on the coverings (13, 14, 32, 34), contains one free area (18, 19, 36, 37) in each case in the vicinity of the two side faces (15, 16) of the body (12, 24), which free areas are offset one against another like rotary mirror images,

c) the connector elements (20, 21, 38, 39) are cap-shaped, consist of conductive and solderable material and are in each case in electrical contact with a covering (13 or 14, 32 or 34) in the region of the free areas (18, 19, 36, 37) of the insulating coating (17, 35).

2. Electrical component according to claim 1, comprising a body (24), which consists of layers (25, 27) of electrically effective material, between which coverings (26, 28) are arranged, which, alternating from layer (25) to layer (27), are led to opposite side faces and there connected to one another in an electrically conducting manner by metal films (29, 30), characterized in that the body (24) consisting of the layers (25, 27) is provided on its two end faces with facings (31, 33) on which the coverings (32, 34), are applied towards the outside, which coatings leave free an insulating strip (40, 41) on one side in each case and on the opposite side are electrically connected in each case to the metal films (29, 30) at that side.

3. Electrical component according to claim 1 or 2, characterized in that, in the case of a ceramic body (12, 24) as electrically effective material, the insulating coating (17, 35) consists of glass, and the connector elements (20, 21, 38, 39) consist of burned-in silver.

4. Electrical component according to claim 1 or 2, characterized in that, in the case of a body (24) comprising plastic layers (25, 27) as electrically effective material, the insulating coating (35) consists of polyimide varnish and the connector elements (38, 39) consist of conducting silver.

## Revendications

1. Composant électrique (11, 23) sous forme de microplaquette, constitué par un corps en forme de plaquette (12, 24), réalisé en un matériau actif du point de vue électrique et comportant des armatures (13, 14, 32, 34) sur ses faces frontales opposées, et pourvu d'éléments de raccordement (20, 21, 38, 39) servant à relier les armatures possédant des polarités opposées à des points de contact (7, 8) d'un circuit imprimé, et pourvu d'un revêtement isolant, caractérisé par les caractéristiques suivantes:

a) chaque armature (13, 14, 32, 34) de même polarité est située uniquement sur une face frontale du corps (12, 24) et recouvre complètement ce dernier hormis au niveau des faces frontales (15, 16) ou bien laisse dégagée une bande isolante (40, 41) en direction de la face latérale (15, 16), b) le corps (12, 24) équipé d'armatures (13, 14, 32, 34) est entouré par un revêtement isolant (17, 35), qui comporte, au-dessus des armatures (13, 14, 32, 34), à proximité des deux faces latérales (15, 16) du corps (12, 24), des surfaces libres respectives (18, 19, 36, 37), décalées les unes par rapport aux autres symétriquement par rapport à l'axe du composant,

c) les éléments de raccordement (20, 21, 38, 39) sont réalisés en forme de capots formés d'un matériau conducteur et soudable et sont en contact électrique respectivement avec un revêtement (13 ou 14, 32 ou 34) dans la zone des surfaces libres (18, 19, 36, 37) du revêtement isolant (17, 35).

2. Composant électrique suivant la revendication 1, comportant un corps (24) constitué par des couches (25, 27), qui sont réalisées en un matériau actif du point de vue électrique et entre lesquelles sont disposés des armatures (26, 28), qui s'étendent, en alternance de la couche (25) à la couche (27), jusqu'à des surfaces latérales opposées et sont reliées d'une manière électriquement conductrice entre elles, en ces emplacements, par des couches métalliques (29, 30), caractérisé par le fait que le corps (24) constitué par les couches (25, 27) comporte, sur ses deux faces frontales, des couches de revêtement (31, 33), qui portent, sur leur face extérieure, des armatures (32, 34), qui laissent à nu, d'un côté, une bande isolante respective (40, 41) et sont reliées électriquement, sur le côté opposé, respectivement aux armatures métalliques (29, 30) situées en cet endroit.

3. Composant électrique suivant la revendication 1 ou 2, caractérisé par le fait que dans le cas d'un corps (12, 24) constitué par de la céramique formant le matériau actif du point de vue électrique, le revêtement isolant (17, 35) est constitué par du verre et les éléments de raccordement (20, 21, 38, 39) sont constitués par de l'argent fixé par cuisson.

4. Composant électrique suivant la revendication 1 ou 2, caractérisé par le fait que, dans le cas d'un corps (24) formé de couches en matière plastique (25, 27) constituant le matériau actif du point de vue électrique, le revêtement isolant (35) est formé d'une laque de polyimide et les éléments de raccordement (38, 39) sont constitués par de l'argent conducteur.

FIG 1

FIG 2

FIG 3

FIG 4